(19) **Europäisches Patentamt European Patent Office Office européen des brevets**

(11) **EP 4 136 742 B1**

(12) **EUROPEAN PATENT SPECIFICATION**

(45) Date of publication and mention of the grant of the patent:
**04.12.2024 Bulletin 2024/49**

(21) Application number: **20939778.5**

(22) Date of filing: **08.06.2020**

(51) International Patent Classification (IPC):
**H02M 3/155** (2006.01)    **H05B 45/36** (2020.01)
**H02M 1/15** (2006.01)    **H02M 1/42** (2007.01)

(52) Cooperative Patent Classification (CPC):
**H02M 1/15; H05B 45/36;** H02M 1/0048;
H02M 1/4258; Y02B 70/10

(86) International application number:
**PCT/CN2020/094877**

(87) International publication number:
**WO 2021/248266 (16.12.2021 Gazette 2021/50)**

(54) **RIPPLE SUPPRESSION CIRCUIT, CONTROLLING METHOD AND DRIVING EQUIPMENT**

SCHALTUNG ZUR UNTERDRÜCKUNG VON WELLIGKEIT, STEUERUNGSVERFAHREN UND ANTRIEBSVORRICHTUNG

CIRCUIT DE SUPPRESSION D'ONDULATIONS, PROCÉDÉ DE COMMANDE ET ÉQUIPEMENT D'ACTIVATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.02.2023 Bulletin 2023/08**

(73) Proprietor: **Tridonic GmbH & Co KG**
**6851 Dornbirn (AT)**

(72) Inventors:
• **CHEN, Zhiwen**
**Shenzhen, Guangdong 518131 (CN)**
• **HU, Zaosheng**
**Shenzhen, Guangdong 518131 (CN)**

(74) Representative: **Rupp, Christian et al**
**Mitscherlich PartmbB**
**Patent- und Rechtsanwälte**
**Karlstraße 7**
**80333 München (DE)**

(56) References cited:
WO-A1-2015/027538    WO-A1-2019/165589
WO-A1-2019/165589    CN-A- 107 734 766
CN-U- 203 788 531    CN-U- 204 291 483
CN-U- 206 850 681    DE-B1- 2 830 655
JP-A- 2003 333 838

EP 4 136 742 B1

## Description

### Technical Field

Embodiments of the present disclosure generally relate to the field of lighting, and more particularly, to ripple suppression circuits, controlling methods and a driving equipment.

### Background

This section introduces aspects that may facilitate better understanding of the present disclosure. Accordingly, the statements of this section are to be read in this light and are not to be understood as admissions about what is in the prior art or what is not in the prior art.

In the field of lighting technology, it is often needed to configure a driving current, which is used to drive a lighting device. The lighting device is LED (Light Emitting Diode) for example.

The lighting device is driven by a driver, which outputs direct current to the lighting device. For most of low cost drivers, output current has high ripple coefficient, e.g. $\pm30\%$ or even higher. High ripple coefficient may make the lighting device to flicker.

Low ripple current is now mandatory to meet regulatory requirements for suppressing low-frequency ripple (100Hz to 120Hz) in LED lighting applications for numerous markets.

Single stage convert is general used as the cost effective solution of LED drivers, which always keep high power factor but also high ripple current. It's low acceptance on the market for these high ripple current devices. Ripple suppression circuit is developed to keep low cost and provide high levels of ripple suppression while maintaining a high power factor.

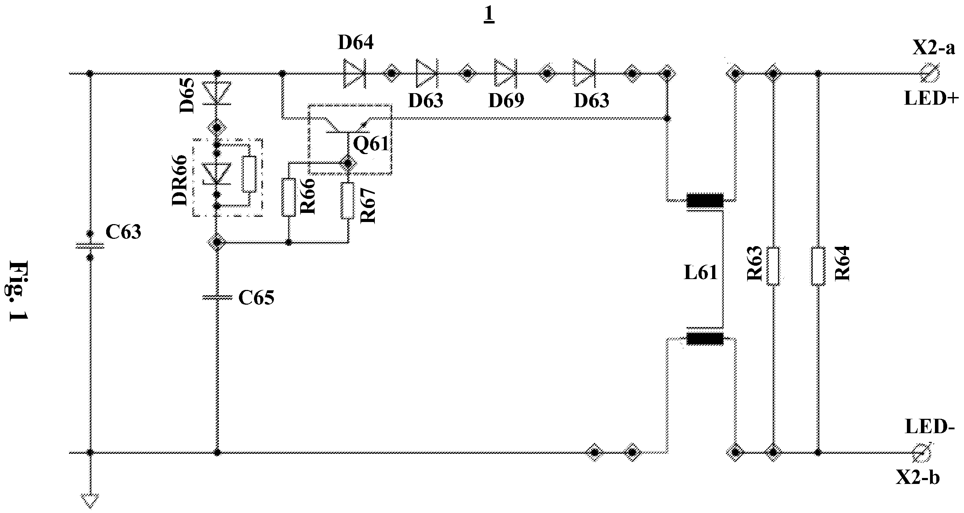

Fig. 1 is a diagram of a ripple suppression circuit according to an existing solution. As shown in Fig. 1, a ripple suppression circuit 1 comprises a capacitor C65 and a transistor Q61, C65 provides filtering that is equal to a capacitor of $(B+1)*C_{65}$, where B equals to DC (direct current) current gain of Q61, $C_{65}$ is capacitance of C65. Therefore, the ripple suppression circuit 1 can work as a capacitance multiplier. Output voltage of the ripple suppression circuit 1 can be provided for driving LED. Besides, the ripple suppression circuit 1 further comprises C63, D63, D64, D65, D69, R63, R64, R66, R67, DR66 and L61; their working principle can be referred to related art, such as WO2019/165589 A1. As another example, document DE 28 30 655 B1 discloses an active filter circuit for power supply smoothing.

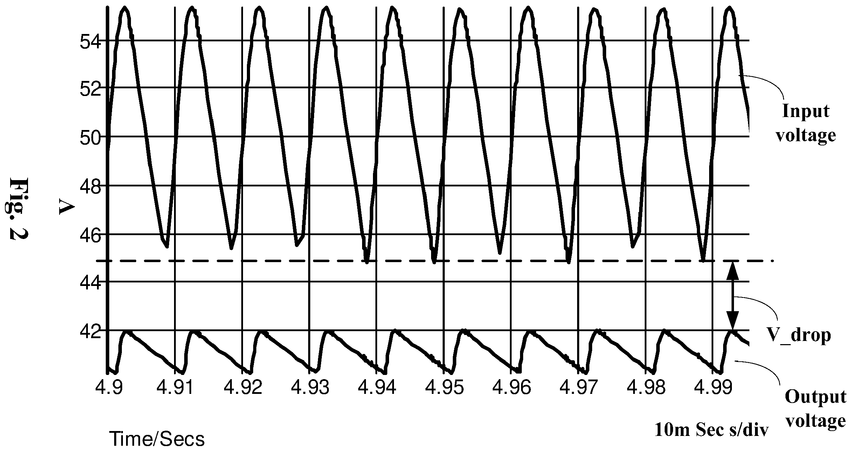

Fig. 2 is a diagram of input voltage and output voltage of the ripple suppression circuit 1. As shown in Fig. 2, a ripple voltage with amplitude of 6V is added on a DC voltage of 50V. There is a voltage drop V_drop on Q61, V_drop results in a difference between the output voltage and minimum value of the input voltage.

### Summary

Inventor of this disclosure found the following limitation in the ripple suppression circuit 1 shown in Fig. 1: value of DR66 needs to be tuned to cover worst case; voltage drop on Q61 is related with output voltage and input voltage; voltage drop on Q61 might be pretty high at the worst case and causes low efficiency and potential thermal issues.

The invention is defined by a ripple suppression circuit, in accordance with claims 1 and 3, and by a controlling method of a ripple suppression circuit, in accordance with claims 7 and 8. Further preferred embodiments are defined in the dependent claims. In general, embodiments of the present disclosure provide ripple suppression circuits, controlling methods and a driving equipment. In the embodiments, a voltage control circuit is used to make output voltage to equal to the minimum value, therefore, the difference between the output voltage and minimum value of the input voltage can be reduced.

According to various embodiments of the present disclosure, the difference between the output voltage and minimum value of the input voltage can be reduced; therefore, power dissipation is reduced, and higher efficiency can be obtained in the ripple suppression circuit.

### Brief Description of the Drawings

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

Fig. 1 is a diagram of a ripple suppression circuit according to an existing solution;

Fig. 2 is a diagram of input voltage and output voltage of the ripple suppression circuit;

Fig. 3 is a diagram of a ripple suppression circuit in accordance with an example not forming part of the present disclosure.

Fig. 4 is a diagram of input voltage and output voltage of the ripple suppression circuit 30

Fig. 5 is a diagram of a ripple suppression circuit in accordance with another embodiment of the present disclosure

Fig. 6 is a diagram of a ripple suppression circuit in accordance with another embodiment of the present disclosure

Fig. 7 shows a flowchart of a controlling method 700 of the ripple suppression circuit.

**Detailed Description**

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

First aspect of embodiments

A ripple suppression circuit is provided in a first embodiment.

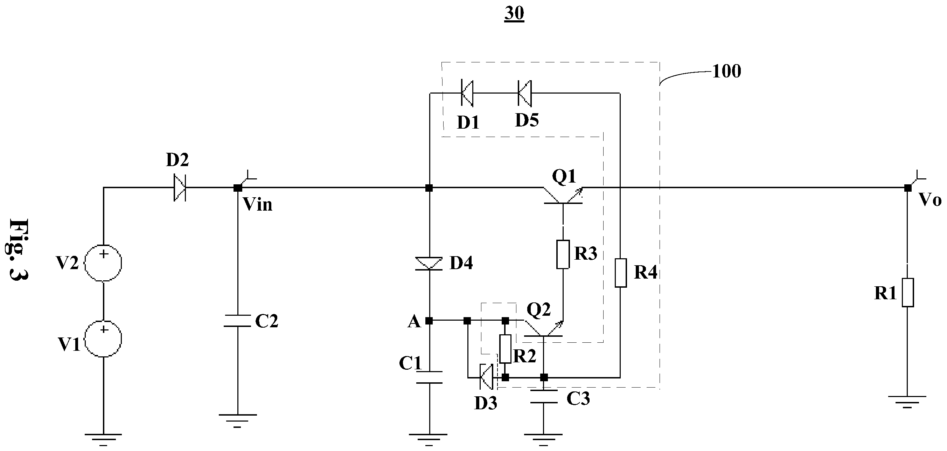

Fig. 3 is a diagram of a ripple suppression circuit in accordance with an example not forming part of the present disclosure. As shown in Fig. 3, a ripple suppression circuit 30 includes a first input port X1-a, a first output port X2-a, a first capacitor C2, a first transistor Q1, a second diode D4, second capacitor C1, a second transistor Q2, a third capacitor C3, and a voltage control circuit 100.

In the example, the first input port X1-a is configured to receive an input voltage via a first diode D2, the input voltage is denoted as Vin. The first output port X2-a is configured to output an output voltage, the output voltage is denoted as Vout.

In the example, the first capacitor C2 is configured to be connected between the first input port X1-a and a ground port. The first transistor Q1 is configured to be connected between the first input port X1-a and the first output port X2-a. The second diode D4 and the second capacitor C1 are configured to be connected in series between the first input port X1-a and the ground port.

The second transistor Q2 is configured to be coupled between a base of the first transistor Q1 and a connecting node A of the second diode D4 and the second capacitor C1. The third capacitor C3 is configured to be connected between a base of the second transistor Q2 and the ground port.

As shown in FIG. 3, the first transistor Q1 is a bipolar transistor, for example an NPN bipolar transistor. The second transistor Q2 is a bipolar transistor, for example an NPN bipolar transistor. An emitter of Q1 is connected to the first output port X2-a, a collector of Q1 is connected to the first input port X1-a, a base of Q1 is connected to an emitter of Q2 via a resistor R3. The collector of the second transistor Q2 is connected to the node A. The embodiment will not be limited thereto, the first transistor Q1 and second transistor Q1 can be of other type, for example a MOS FET (Metal-Oxide-Semiconductor Field-Effect Transistor).

The voltage control circuit 100 is configured to be connected to the base of the second transistor Q2. When the input voltage drops to a minimum value, the voltage control circuit 100 makes voltage of the base of the second transistor Q2 to be higher than the minimum value, and makes the output voltage to equal to the minimum value.

The difference between the output voltage and minimum value of the input voltage can be reduced; therefore, power dissipation of Q1 is reduced, and higher efficiency can be obtained in the ripple suppression circuit 30.

It should be noted that the working principle of the ripple suppression circuit 30 is described from the view point of voltage, that is, the ripple suppression circuit 30 can suppress voltage ripple on the output voltage, however the ripple suppression circuit 30 can also suppress current ripple on output current, it depends on a V-I characteristic of a load of the ripple suppression circuit 30. For example, when a load of the ripple suppression circuit 30 is an LED or other electrical element having a similar V-I characteristic with an LED, low ripple on the output voltage will result in low ripple on the output current which drives the LED, therefore the ripple suppression circuit 30 is used for suppressing current ripple on output current. For another example, when a load of the ripple suppression circuit 30 is a resistor or other electrical element having a similar V-I characteristic with a resistor, the output voltage with low ripple is used to drive the resistor, therefore the ripple suppression circuit 30 can suppress voltage ripple on output voltage.

As shown in Fig. 3, the voltage control circuit 100 includes: a first resistor R2, a third diode D1 and a fourth diode D5.

The first resistor R2 is configured to be connected between the collector of the second transistor Q2 and the base of the second transistor Q2. A current may flow from the collector of Q2 to the base of Q2 via the first resistor R2 to charge the third capacitor C3.

The third diode D1 and the fourth diode D5 are configured to be reversely coupled in serial between the first input port X1-a and the base of the second transistor Q2. A cathode of the third diode D1 is connected to the first input port X1-a, an anode of the fourth diode D5 is coupled to the base of the second transistor Q2. For example, the anode of the fourth diode D5 is connected to the base of the second transistor Q2 via a resistor R4.

As shown in Fig. 3, V1 denotes a DC voltage, V2 denotes a ripple voltage, V2 is added on V1 so as to simulate the DC voltage with ripple. For example, V1 is 50V, V2 is sine signal with amplitude of 6V and frequency of 100Hz.

The DC voltage with ripple is rectified by a diode D2. At the output side, a resistor R1 is connected between the output port X2-a and the ground port.

As shown in Fig. 3, when the input voltage drops to the minimum value Vin_min, voltage of the base of Q2 and the output voltage satisfies the following conditions:

$$Vo=Vb-2*Vf1 \qquad (1)$$

$$Vb=Vin\_min+2*Vf2 \qquad (2)$$

$$Vo= Vin\_min+2*Vf2-2*Vf1 = Vin\_min \qquad (3)$$

In (1), (2) and (3), Vo denotes the output voltage, Vb denotes the voltage of the base of Q2, Vf2 denotes a turn-on voltage of D1 or D5, Vf1 denotes a voltage drop between the base of Q2 and the emitter of Q2 or a voltage drop between the base of Q1 and the emitter of Q1. Vf1 is equal to Vf2.

According to (3), Vo is equal to Vin_min, thus difference between the output voltage and the minimum of the input voltage can be reduced. The power dissipation of the ripple suppression circuit 30 is reduced, and the risk of thermal issue is reduced.

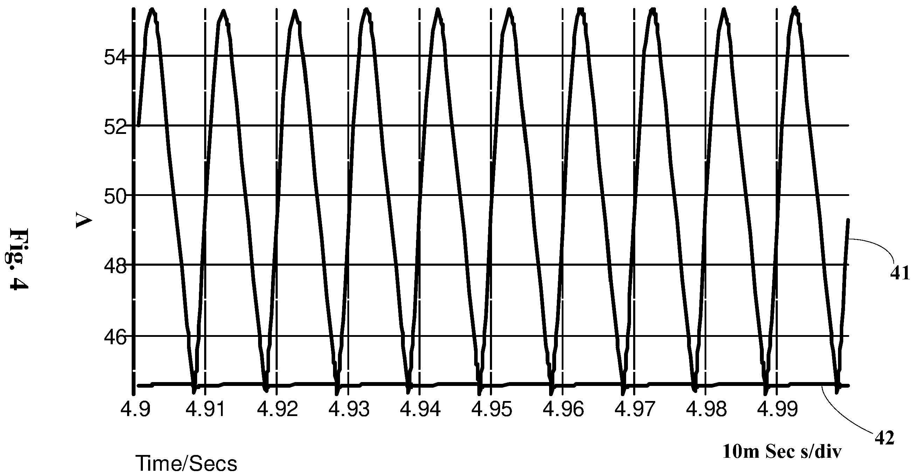

Fig. 4 is a diagram of input voltage and output voltage of the ripple suppression circuit 30. As shown in Fig. 4, a ripple voltage with an amplitude of 6V is added on a DC voltage of 50V. 41 denotes the input voltage, 42 denotes the output voltage. The output voltage 42 is equals to the minimum of the input voltage 41. Therefore, the difference between the output voltage 42 and the minimum of the input voltage 41 is getting smaller.

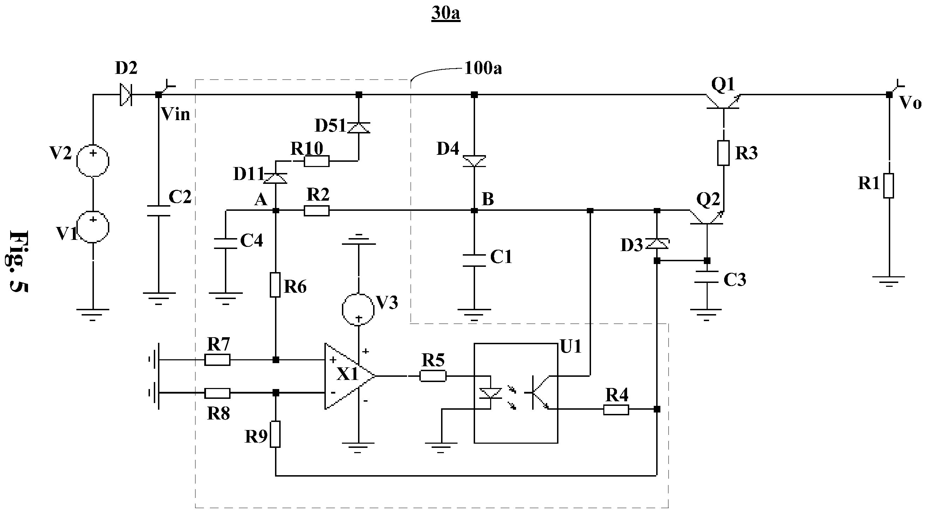

Fig. 5 is a diagram of a ripple suppression circuit in accordance with another embodiment of the present disclosure. As shown in Fig. 5, a ripple suppression circuit 30a is a variation of the ripple suppression circuit 30, their differences will be described as follows Description for common elements in Fig. 5 and Fig. 3 is omitted.

As shown in Fig. 5, the ripple suppression circuit 30a includes a voltage control circuit 100a. The voltage control circuit 100a includes: a fourth capacitor C4, a fifth diode D11, a sixth diode D51, a comparator X1 and an optical coupler U1.

As shown in Fig. 5, the fourth capacitor C4 is configured to be coupled between the ground port and the connecting node A of the second diode D4 and the second capacitor C1.

The fifth diode D11 and the sixth diode D51 are configured to be reversely coupled in series between the first input port X1-a and the fourth capacitor C4. A cathode of the sixth diode D51 is connected to the first port X1-a, an anode of the fifth diode D11 is connected to the fourth capacitor C4. Besides, a resistor R2 is connected between the anode (connecting node A) of D11 and the collector (connecting node B) of Q2. The resistor R2 has a large resistance (e.g. 100k Ω), and is used for charging the fourth capacitor C4.

The comparator X1 is configured to compare the voltage at the base of the second transistor Q2 with the voltage of anode of the fifth diode D11, and output a comparison result. For example, a resistor R6 is connected between the anode of D11 and "+" input port of the comparator X1, so as to detect the voltage of the anode (i.e. the voltage of connecting node A) of D11; a resistor R9 is connected between the base of Q2 and "-" input port of the comparator X1, so as to detect the voltage of the base (i.e. Vb) of Q2; a resistor R7 is connected between the "+" input port of X1 and the ground port; a resistor R8 is connected between the "-" input port of X1 and the ground port, resistance of R7 is equal to resistance of R8; a voltage V3 is applied to a "+" power input port of X1, a "-" power input port of X1 is connected to the ground port; a resistor R5 is connected to an output port of X1. When the voltage of anode of D11 is higher than the voltage of base of Q2, the output port of X1 outputs a signal with high voltage as a comparison result.

The optical coupler U1 is configured to be controlled by the comparison result, when the voltage of the anode of the fifth diode D11 is higher than the voltage at the base of the second transistor Q2, the optical coupler U1 couples the base of the second transistor Q2 to the anode of the fifth diode D11.

For example, an input port of the optical coupler U1 receives the comparison result, two output ports of the optical coupler U1 are connected to the base of the second transistor Q2 and the connecting node A (the collector of Q2) of the second diode D4 and the second capacitor C1, respectively. When the comparison result is with high voltage, a transistor in U1 is conducted, and C3 is discharged by the transistor in U1, R4 and R9, until the voltage of the base of Q2 is equal to the voltage of connecting node A.

As shown in Fig. 5, when the input voltage drops to the minimum value Vin_min, the voltage of connecting node A is (Vin_min+2*Vf21). The voltage of the base of Q2 and the output voltage (Vo) satisfies the following conditions:

$$Vo = Vb - 2*Vf1 \qquad (4)$$

$$Vb = Vin\_min + 2*Vf21 \qquad (5)$$

$$Vo = Vin\_min + 2*Vf2 - 2*Vf1 = Vin\_min \qquad (6)$$

In (4), (5) and (6), Vo denotes the output voltage, Vb denotes the voltage of the base of Q2, Vf21 denotes a turn-on voltage of D11 or D51, Vf1 denotes a voltage drop between the base of Q2 and the emitter of Q2 or a voltage drop between the base of Q1 and the emitter of Q1. Vf1 is equal to Vf21.

According to (6), in the embodiment of Fig. 5, Vo is equal to Vin_min, thus difference between the output voltage and the minimum of the input voltage can be reduced. The power dissipation of the ripple suppression circuit 30a is reduced, and the risk of thermal issue is reduced.

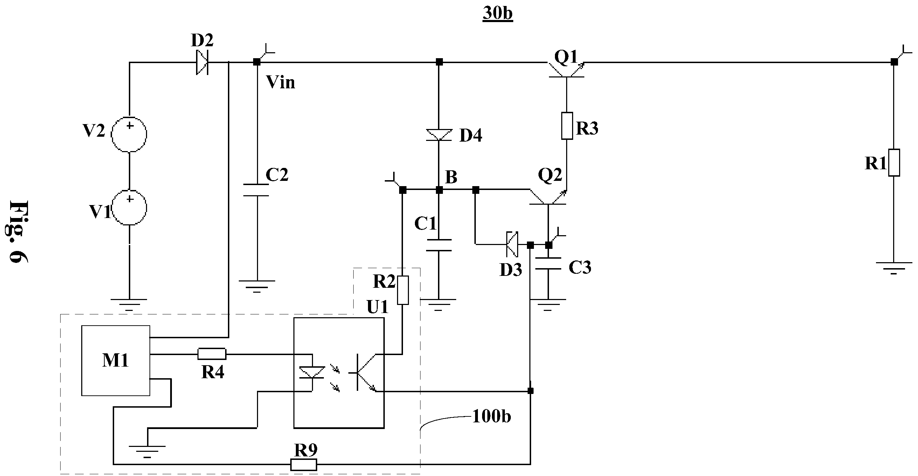

Fig. 6 is a diagram of a ripple suppression circuit in accordance with another embodiment of the present disclosure. As shown in Fig. 6, a ripple suppression circuit 30b is variation of the ripple suppression circuit 30; their differences will be described as follows. Description for common elements in Fig. 6 and Fig. 3 is omitted.

As shown in Fig. 6, the ripple suppression circuit 30b includes a voltage control circuit 100b. The voltage control circuit 100b includes: a controller M1, a fifth diode D11, and an optical coupler U1. The voltage control circuit 100b further includes a resistor R9, which is used to feedback a base voltage of Q2 to the controller M1.

The controller M1 is configured to detect the input voltage Vin, and output a controlling signal. When the input voltage drops to the minimum value (i.e. Vin_min), the controller M1 compares (Vin_min+2Vf1) with the base voltage (Vb) of Q2. If (Vin_min+2Vf1) is higher than Vb, the controller M1 outputs a first controlling signal. When the base voltage (Vb) of Q2 is equal to (Vin_min+2Vfl), the controller M1 stops outputting the first controlling signal. For example, the controller M1 is MCU (Microcontroller Unit).

The optical coupler U1 is configured to be controlled by the controlling signal, when the first controlling signal is received, the optical coupler U1 connects the base of the second transistor Q2 to the collector of the second transistor Q2.

For example, an input port of the optical coupler U1 receives the controlling signal, two output ports of the optical coupler U1 are coupled to the base of the second transistor Q2 and the collector of the second transistor Q2, respectively. For example, when U1 receives the first controlling signal, a transistor in U1 is conducted, and the capacitor C3 is discharged by the transistor in U1 and the resistor R9, until the base voltage (Vb) of Q2 is equal to (Vin_min+2Vf1). As shown in Fig. 6, the resistor R9 is used for two purposes: one is to sample the base voltage (Vb) for M1, and the other one is to discharge C3.

As shown in Fig. 6, when the input voltage drops to the minimum value Vin_min, the controller M1 controls the base voltage (Vb) of Q2 to become Vb=Vin_min+2*Vf1, and output voltage Vo becomes Vo=Vb- 2*Vf1=Vin_min. Vf1 denotes a voltage drop between the base of Q2 and the emitter of Q2 or a voltage drop between the base of Q1 and the emitter of Q1.

According to the embodiment of Fig. 6, Vo is equal to Vin_min, thus difference between the output voltage and the minimum of the input voltage can be reduced. The power dissipation of the ripple suppression circuit 30b is reduced, and the risk of thermal issue is reduced.

In Figs. 3, 5 and 6, the ripple suppression circuit 100a, 100b further includes a Zener diode D3. An anode of the Zener diode D3 is connected to the base of the second transistor Q2, a cathode of the Zener diode D3 is connected to the collector of the second transistor Q2. The Zener diode D3 can keep the voltage drop between the collector and base of Q2 from getting too high.

Second aspect of embodiments

A controlling method of a ripple suppression circuit. The ripple suppression circuit of the first aspect of embodiments is provided in an embodiment. The same contents as those in the first aspect of embodiments are omitted.

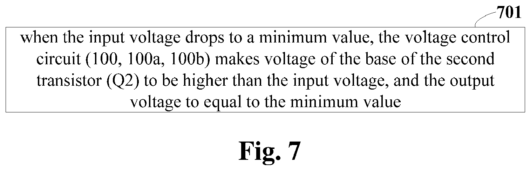

Fig. 7 shows a flowchart of a controlling method 700 of the ripple suppression circuit.

As shown in Fig. 7, the method 700 includes:

Block 701: when the input voltage drops to a minimum value, the voltage control circuit (100a, 100b) makes voltage of the base of the second transistor (Q2) to be higher than the input voltage, and the output voltage to equal to the minimum value.

According to the second aspect of embodiments, the difference between the output voltage and minimum value of the input voltage can be reduced; therefore, power dissipation of Q1 and the ripple suppression circuit is reduced, and higher efficiency can be obtained in the ripple suppression circuit.

Third aspect of embodiments

A driving equipment is provided in an embodiment. The driving equipment includes a driving circuit and the ripple suppression circuit according to the first aspect of embodiments.

In the embodiment, the ripple suppression circuit receives the input voltage provided by the driving circuit, and outputs signal with low ripple coefficient. The signal with low ripple coefficient may be provided to a lighting device, so that flicker of the lighting device can be reduced.

The driving circuit may be formed by a flyback converter or resonant halfbridge converter or LLC converter including a transformer. Instead of the transformer there might from an inductor a part of a switched converter e.g. a buck converter or boost converter which forms the driving circuit. The clocking of the driving circuit and especially the transformer by at least one controllable switch which is clocked at high frequency may depend on a controlling signal inputted to a control input of the driving circuit. For instance the frequency and / or the duty cycle of the controllable switch of the driving circuit may be adjusted in dependency on the controlling signal inputted to an input of the driving circuit.

The driving circuit may generate a driving current or driving voltage for the lighting device. The driving circuit may output the driving current or driving voltage for the lighting device at the first input port X1-a in order to output the input voltage to the ripple suppression circuit 30 (or 30a, 30b).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments The invention is defined by the appended claims.

## Claims

1. A ripple suppression circuit, comprising:

   a first diode (D2);
   a first input port, configured to receive an input voltage via the first diode (D2);
   a first output port, configured to output an output voltage;
   a first capacitor (C2), configured to be connected between the first input port and a ground port;
   a first transistor (Q1), configured to be connected between the first input port and the first output port;
   a second diode (D4) and a second capacitor (C1), configured to be connected in series between the first input port and the ground port;
   a second transistor (Q2), configured to be coupled between a base of the first transistor and a connecting node of the second diode (D4) and the second capacitor (C1);
   a third capacitor (C3), configured to be connected between a base of the second transistor and the ground port;

and

a voltage control circuit (100a) configured to be connected to the base of the second transistor (Q2), wherein when the input voltage drops to a minimum value, the voltage control circuit (100) is configured to make a voltage of the base of the second transistor (Q2) to be higher than the input voltage, and the output voltage to be equal to the minimum value,

**characterized in that** the voltage control circuit (100a) comprises:

a fourth capacitor (C4), configured to be coupled between the ground port and the connecting node of the second diode (D4) and the second capacitor (C1);
a fifth diode (D11) and a sixth diode (D51), configured to be reversely coupled in series between the first input port and the fourth capacitor (C4), a cathode of the sixth diode (D51) is connected to the first port, an anode of the fifth diode (D11) is coupled to the fourth capacitor (C4);
a comparator (X1), configured to compare the voltage at the base of the second transistor (Q2) with the voltage of the anode of the fifth diode (D11), and output a comparison result; and
an optical coupler (U1), configured to be controlled by the comparison result, wherein when the voltage at the base of the second transistor (Q2) is lower than the voltage of the anode of the fifth diode (D11), the optical coupler is configured to couple the base of the second transistor (Q2) to the anode of the fifth diode (D11).

2. The ripple suppression circuit according to claim 1, wherein,

an input port of the optical coupler (U1) is configured to receive the comparison result,
two output ports of the optical coupler (U1) are connected to the base of the second transistor (Q2) resp. the connecting node of the second diode (D4) and the second capacitor (C1).

3. A ripple suppression circuit, comprising:

a first diode (D2);
a first input port, configured to receive an input voltage via the first diode (D2);
a first output port, configured to output an output voltage;
a first capacitor (C2), configured to be connected between the first input port and a ground port;
a first transistor (Q1), configured to be connected between the first input port and the first output port;
a second diode (D4) and a second capacitor (C1), configured to be connected in series between the first input port and the ground port;
a second transistor (Q2), configured to be coupled between a base of the first transistor and a connecting node of the second diode (D4) and the second capacitor (C1);
a third capacitor (C3), configured to be connected between a base of the second transistor and the ground port; and
a voltage control circuit (100b) configured to be connected to the base of the second transistor (Q2), wherein when the input voltage drops to a minimum value, the voltage control circuit (100) is configured to make a voltage of the base of the second transistor (Q2) to be higher than the input voltage, and the output voltage to be equal to the minimum value,

**characterized in that** the voltage control circuit (100b) comprises:

a controller (M1), configured to detect the input voltage, and output a controlling signal, wherein when the input voltage drops to the minimum value, the controller is configured to output a first controlling signal; and
an optical coupler (U1), configured to be controlled by the controlling signal, wherein when the first controlling signal is received, the optical coupler is configured to connect the base of the second transistor (Q2) to the collector of the second transistor (Q2).

4. The ripple suppression circuit according to claim 3, wherein,

an input port of the optical coupler (U1) is configured to receive the controlling signal,
two output ports of the optical coupler (U1) are coupled to the base of the second transistor (Q2) resp. the collector of the second transistor (Q2).

5. The ripple suppression circuit according to any one of claims 1-4, wherein,

the ripple suppression circuit further comprises a Zener diode (D3), an anode of the Zener diode (D3) is connected to the base of the second transistor (Q2), a cathode of the Zener diode (D3) is connected to the collector of the second transistor (Q2).

6. A driving equipment comprising the ripple suppression circuit according to one of claims 1-5.

7. A controlling method of a ripple suppression circuit, the ripple suppression circuit comprises:

a first diode (D2);
a first input port, configured to receive an input voltage via the first diode (D2);
a first output port, configured to output an output voltage;
a first capacitor (C2), configured to be connected between the first input port and a ground port;
a first transistor (Q1), configured to be connected between the first input port and the first output port;
a second diode (D4) and a second capacitor (C1), configured to be connected in series between the first input port and the ground port;
a second transistor (Q2), configured to be coupled between a base of the first transistor and a connecting node of the second diode (D4) and the second capacitor (C1);
a third capacitor (C3), configured to be connected between a base of the second transistor and the ground port; and
a voltage control circuit (100a), configured to be connected to the base of the second transistor (Q2), wherein the voltage control circuit (100a) comprises:

a fourth capacitor (C4), configured to be coupled between the ground port and the connecting node of the second diode (D4) and the second capacitor (C1);
a fifth diode (D11) and a sixth diode (D51), configured to be reversely coupled in series between the first input port and the fourth capacitor (C4), a cathode of the sixth diode (D51) is connected to the first port, an anode of the fifth diode (D11) is coupled to the fourth capacitor (C4);
a comparator (X1); and
an optical coupler (U1), configured to be controlled by a comparison result of the comparator (X1);
the controlling method comprises:

when the input voltage drops to a minimum value, making, by the voltage control circuit (100a), a voltage of the base of the second transistor (Q2) to be higher than the input voltage, and the output voltage to be equal to the minimum value,
wherein the making step comprises:

comparing, by the comparator (X1),
the voltage at the base of the second transistor (Q2) with the voltage of the anode of the fifth diode (D1 1), and outputting the comparison result; and
when the voltage at the base of the second transistor (Q2) is lower than the voltage of the anode of the fifth diode (D11), coupling, by the optical coupler (U1), the base of the second transistor (Q2) to the anode of the fifth diode (D1 1).

8. A controlling method of a ripple suppression circuit, the ripple suppression circuit comprises:

a first diode (D2);
a first input port, configured to receive an input voltage via the first diode (D2);
a first output port, configured to output an output voltage;
a first capacitor (C2), configured to be connected between the first input port and a ground port;
a first transistor (Q1), configured to be connected between the first input port and the first output port;
a second diode (D4) and a second capacitor (C1), configured to be connected in series between the first input port and the ground port;
a second transistor (Q2), configured to be coupled between a base of the first transistor and a connecting node of the second diode (D4) and the second capacitor (C1);
a third capacitor (C3), configured to be connected between a base of the second transistor and the ground port; and
a voltage control circuit (100b), configured to be connected to the base of the second transistor (Q2), wherein the voltage control circuit (100b) comprises:

a controller (M1); and
an optical coupler (U1), configured to be controlled by a controlling signal of the controller (M1);
the controlling method comprises:

> when the input voltage drops to a minimum value, making a voltage of the base of the second transistor (Q2) to be higher than the input voltage, and the output voltage to be equal to the minimum value, wherein the making step comprises:

>> detecting, by the controller (M1), the input voltage;
>> when the input voltage drops to the minimum value, outputting, by the controller (M1),
>> a first controlling signal;
>> and
>> when the first controlling signal is received, connecting, by the optical coupler (U1), the base of the second transistor (Q2) to the collector of the second transistor (Q2).

**Patentansprüche**

1. Welligkeitsunterdrückungsschaltung, umfassend:

   eine erste Diode (D2);
   einen ersten Eingangsanschluss, der konfiguriert ist, um eine Eingangsspannung über die erste Diode (D2) zu empfangen;
   einen ersten Ausgangsanschluss, der konfiguriert ist, um eine Ausgangsspannung auszugeben;
   einen ersten Kondensator (C2), der konfiguriert ist, um zwischen dem ersten Eingangsanschluss und einem Erdungsanschluss verbunden zu werden;
   einen ersten Transistor (Q1), der konfiguriert ist, um zwischen dem ersten Eingangsanschluss und dem ersten Ausgangsanschluss verbunden zu werden;
   eine zweite Diode (D4) und einen zweiten Kondensator (C1), die konfiguriert sind, um zwischen dem ersten Eingangsanschluss und dem Erdungsanschluss in Reihe geschaltet zu werden;
   einen zweiten Transistor (Q2), der konfiguriert ist, um zwischen einer Basis des ersten Transistors und einem Verbindungsknoten der zweiten Diode (D4) und dem zweiten Kondensator (C1) gekoppelt zu werden;
   einen dritten Kondensator (C3), der konfiguriert ist, um zwischen einer Basis des zweiten Transistors und dem Erdungsanschluss verbunden zu werden; und
   eine Spannungssteuerschaltung (100a), die konfiguriert ist, um mit der Basis des zweiten Transistors (Q2) verbunden zu werden, wobei, wenn die Eingangsspannung auf einen Mindestwert abfällt, die Spannungssteuerschaltung (100) konfiguriert ist, um Folgendes zu bearbeiten: eine Spannung an der Basis des zweiten Transistors (Q2), um höher als die Eingangsspannung zu sein, und die Ausgangsspannung, um gleich dem Mindestwert zu sein, **dadurch gekennzeichnet, dass** die Spannungssteuerschaltung (100a) umfasst:

   > einen vierten Kondensator (C4), der konfiguriert ist, um zwischen dem Erdungsanschluss und dem Verbindungsknoten der zweiten Diode (D4) und dem zweiten Kondensator (C1) gekoppelt zu werden;
   > eine fünfte Diode (D11) und eine sechste Diode (D51), die konfiguriert sind, um zwischen dem ersten Eingangsanschluss und dem vierten Kondensator (C4) umgekehrt in Reihe geschaltet zu werden, wobei eine Kathode der sechsten Diode (D51) mit dem ersten Anschluss verbunden ist, eine Anode der fünften Diode (D11) mit dem vierten Kondensator (C4) gekoppelt ist;
   > einen Komparator (X1), der konfiguriert ist, um die Spannung an der Basis des zweiten Transistors (Q2) mit der Spannung der Anode der fünften Diode (D11) zu vergleichen und ein Vergleichsergebnis auszugeben; und
   > einen Optokoppler (U1), der konfiguriert ist, um durch das Vergleichsergebnis gesteuert zu werden, wobei, wenn die Spannung an der Basis des zweiten Transistors (Q2) niedriger als die Spannung der Anode der fünften Diode (D11) ist, der Optokoppler konfiguriert ist, um die Basis des zweiten Transistors (Q2) mit der Anode der fünften Diode (D11) zu koppeln.

2. Welligkeitsunterdrückungsschaltung nach Anspruch 1, wobei

   ein Eingangsanschluss des Optokopplers (U1) konfiguriert ist, um das Vergleichsergebnis zu empfangen,
   zwei Ausgangsanschlüsse des Optokopplers (U1) mit der Basis des zweiten Transistors (Q2) bzw. dem Verbindungsknoten der zweiten Diode (D4) und dem zweiten Kondensator (C1) verbunden sind.

3. Welligkeitsunterdrückungsschaltung, umfassend:

eine erste Diode (D2);
einen ersten Eingangsanschluss, der konfiguriert ist, um eine Eingangsspannung über die erste Diode (D2) zu empfangen;
einen ersten Ausgangsanschluss, der konfiguriert ist, um eine Ausgangsspannung auszugeben;
einen ersten Kondensator (C2), der konfiguriert ist, um zwischen dem ersten Eingangsanschluss und einem Erdungsanschluss verbunden zu werden;
einen ersten Transistor (Q1), der konfiguriert ist, um zwischen dem ersten Eingangsanschluss und dem ersten Ausgangsanschluss verbunden zu werden;
eine zweite Diode (D4) und einen zweiten Kondensator (C1), die konfiguriert sind, um zwischen dem ersten Eingangsanschluss und dem Erdungsanschluss in Reihe geschaltet zu werden;
einen zweiten Transistor (Q2), der konfiguriert ist, um zwischen einer Basis des ersten Transistors und einem Verbindungsknoten der zweiten Diode (D4) und dem zweiten Kondensator (C1) gekoppelt zu werden;
einen dritten Kondensator (C3), der konfiguriert ist, um zwischen einer Basis des zweiten Transistors und dem Erdungsanschluss verbunden zu werden; und
eine Spannungssteuerschaltung (100b), die konfiguriert ist, um mit der Basis des zweiten Transistors (Q2) verbunden zu werden, wobei, wenn die Eingangsspannung auf einen Mindestwert abfällt, die Spannungssteuerschaltung (100) konfiguriert ist, um Folgendes zu bearbeiten: eine Spannung an der Basis des zweiten Transistors (Q2), um höher als die Eingangsspannung zu sein, und die Ausgangsspannung, um gleich dem Mindestwert zu sein, **dadurch gekennzeichnet, dass** die Spannungssteuerschaltung (100b) umfasst:

eine Steuereinrichtung (M1), die konfiguriert ist, um die Eingangsspannung zu erkennen und ein Steuersignal auszugeben, wobei die Steuereinrichtung konfiguriert ist, um ein erstes Steuersignal auszugeben, wenn die Eingangsspannung auf den Mindestwert abfällt; und
einen Optokoppler (U1), der konfiguriert ist, um durch das Steuersignal gesteuert zu werden, wobei, wenn das erste Steuersignal empfangen wird, der Optokoppler konfiguriert ist, um die Basis des zweiten Transistors (Q2) mit dem Kollektor des zweiten Transistors (Q2) zu verbinden.

4. Welligkeitsunterdrückungsschaltung nach Anspruch 3, wobei

ein Eingangsanschluss des Optokopplers (U1) konfiguriert ist, um das Steuersignal zu empfangen,
zwei Ausgangsanschlüsse des Optokopplers (U1) mit der Basis des zweiten Transistors (Q2) bzw. dem Kollektor des zweiten Transistors (Q2) gekoppelt sind.

5. Welligkeitsunterdrückungsschaltung nach einem der Ansprüche 1 bis 4, wobei
die Welligkeitsunterdrückungsschaltung ferner eine Zenerdiode (D3) umfasst, wobei eine Anode der Zenerdiode (D3) mit der Basis des zweiten Transistors (Q2) verbunden ist, eine Kathode der Zenerdiode (D3) mit dem Kollektor des zweiten Transistors (Q2) verbunden ist.

6. Antriebsausrüstung, umfassend die Welligkeitsunterdrückungsschaltung nach einem der Ansprüche 1 bis 5.

7. Steuerverfahren für eine Welligkeitsunterdrückungsschaltung, wobei die Welligkeitsunterdrückungsschaltung umfasst:

eine erste Diode (D2);
einen ersten Eingangsanschluss, der konfiguriert ist, um eine Eingangsspannung über die erste Diode (D2) zu empfangen;
einen ersten Ausgangsanschluss, der konfiguriert ist, um eine Ausgangsspannung auszugeben;
einen ersten Kondensator (C2), der konfiguriert ist, um zwischen dem ersten Eingangsanschluss und einem Erdungsanschluss verbunden zu werden;
einen ersten Transistor (Q1), der konfiguriert ist, um zwischen dem ersten Eingangsanschluss und dem ersten Ausgangsanschluss verbunden zu werden;
eine zweite Diode (D4) und einen zweiten Kondensator (C1), die konfiguriert sind, um zwischen dem ersten Eingangsanschluss und dem Erdungsanschluss in Reihe geschaltet zu werden;
einen zweiten Transistor (Q2), der konfiguriert ist, um zwischen einer Basis des ersten Transistors und einem Verbindungsknoten der zweiten Diode (D4) und dem zweiten Kondensator (C1) gekoppelt zu werden;
einen dritten Kondensator (C3), der konfiguriert ist, um zwischen einer Basis des zweiten Transistors und dem Erdungsanschluss verbunden zu werden; und
eine Spannungssteuerschaltung (100a), die konfiguriert ist, um mit der Basis des zweiten Transistors (Q2) verbunden zu werden, wobei die Spannungssteuerschaltung (100a) umfasst:

einen vierten Kondensator (C4), der konfiguriert ist, um zwischen dem Erdungsanschluss und dem Verbindungsknoten der zweiten Diode (D4) und dem zweiten Kondensator (C1) gekoppelt zu werden;
eine fünfte Diode (D11) und eine sechste Diode (D51), die konfiguriert sind, um zwischen dem ersten Eingangsanschluss und dem vierten Kondensator (C4) umgekehrt in Reihe geschaltet zu werden, wobei eine Kathode der sechsten Diode (D51) mit dem ersten Anschluss verbunden ist, eine Anode der fünften Diode (D11) mit dem vierten Kondensator (C4) gekoppelt ist;
einen Komparator (X1); und
einen Optokoppler (U1), der konfiguriert ist, um durch ein Vergleichsergebnis des Komparators (X1) gesteuert zu werden;
wobei das Steuerverfahren umfasst:

wenn die Eingangsspannung auf einen Mindestwert abfällt, Bearbeiten, durch die Spannungssteuerschaltung (100a), einer Spannung der Basis des zweiten Transistors (Q2), um höher als die Eingangsspannung zu sein, und der Ausgangsspannung, um gleich dem Mindestwert zu sein,
wobei der Bearbeitungsschritt umfasst:

Vergleichen, durch den Komparator (X1), der Spannung an der Basis des zweiten Transistors (Q2) mit der Spannung der Anode der fünften Diode (D11) und Ausgeben des Vergleichsergebnisses; und
wenn die Spannung an der Basis des zweiten Transistors (Q2) niedriger als die Spannung der Anode der fünften Diode (D11) ist, Koppeln, durch den Optokoppler (U1), der Basis des zweiten Transistors (Q2) mit der Anode der fünften Diode (D11).

8. Steuerverfahren für eine Welligkeitsunterdrückungsschaltung, wobei die Welligkeitsunterdrückungsschaltung umfasst:

eine erste Diode (D2);
einen ersten Eingangsanschluss, der konfiguriert ist, um eine Eingangsspannung über die erste Diode (D2) zu empfangen;
einen ersten Ausgangsanschluss, der konfiguriert ist, um eine Ausgangsspannung auszugeben;
einen ersten Kondensator (C2), der konfiguriert ist, um zwischen dem ersten Eingangsanschluss und einem Erdungsanschluss verbunden zu werden;
einen ersten Transistor (Q1), der konfiguriert ist, um zwischen dem ersten Eingangsanschluss und dem ersten Ausgangsanschluss verbunden zu werden;
eine zweite Diode (D4) und einen zweiten Kondensator (C1), die konfiguriert sind, um zwischen dem ersten Eingangsanschluss und dem Erdungsanschluss in Reihe geschaltet zu werden;
einen zweiten Transistor (Q2), der konfiguriert ist, um zwischen einer Basis des ersten Transistors und einem Verbindungsknoten der zweiten Diode (D4) und dem zweiten Kondensator (C1) gekoppelt zu werden;
einen dritten Kondensator (C3), der konfiguriert ist, um zwischen einer Basis des zweiten Transistors und dem Erdungsanschluss verbunden zu werden; und
eine Spannungssteuerschaltung (100b), die konfiguriert ist, um mit der Basis des zweiten Transistors (Q2) verbunden zu werden, wobei die Spannungssteuerschaltung (100b) umfasst:

eine Steuereinrichtung (M1); und
einen Optokoppler (U1), der konfiguriert ist, um durch ein Steuersignal der Steuereinrichtung (M1) gesteuert zu werden;
wobei das Steuerverfahren umfasst:

wenn die Eingangsspannung auf einen Mindestwert abfällt, Bearbeiten einer Spannung der Basis des zweiten Transistors (Q2), um höher als die Eingangsspannung zu sein, und der Ausgangsspannung, um gleich dem Mindestwert zu sein,
wobei der Bearbeitungsschritt umfasst:

Erkennen, durch die Steuereinrichtung (M1), der Eingangsspannung;
wenn die Eingangsspannung auf den Mindestwert abfällt, Ausgeben, durch die Steuereinrichtung (M1), eines ersten Steuersignals;
und
wenn das erste Steuersignal empfangen wird, Verbinden, durch den Optokoppler (U1), der Basis des zweiten Transistors (Q2) mit dem Kollektor des zweiten Transistors (Q2).

**Revendications**

1. Circuit de suppression d'ondulation, comprenant :

   une première diode (D2) ;
   un premier port d'entrée, configuré pour recevoir une tension d'entrée par l'intermédiaire de la première diode (D2) ;
   un premier port de sortie, configuré pour délivrer une tension de sortie ;
   un premier condensateur (C2), configuré pour être connecté entre le premier port d'entrée et un port de masse ;
   un premier transistor (Q1), configuré pour être connecté entre le premier port d'entrée et le premier port de sortie ;
   une seconde diode (D4) et un deuxième condensateur (C1), configurés pour être connectés en série entre le premier port d'entrée et le port de masse ;
   un second transistor (Q2), configuré pour être couplé entre une base du premier transistor et un noeud de connexion de la seconde diode (D4) et du deuxième condensateur (C1) ;
   un troisième condensateur (C3), configuré pour être connecté entre une base du second transistor et le port de masse ; et
   un circuit de commande de tension (100a) configuré pour être connecté à la base du second transistor (Q2), dans lequel lorsque la tension d'entrée chute à une valeur minimale, le circuit de commande de tension (100) est configuré pour amener une tension de la base du second transistor (Q2) à être supérieure à la tension d'entrée, et la tension de sortie à être égale à la valeur minimale, **caractérisé en ce que** le circuit de commande de tension (100a) comprend :

      un quatrième condensateur (C4), configuré pour être couplé entre le port de masse et le noeud de connexion de la seconde diode (D4) et du deuxième condensateur (C1) ;
      une cinquième diode (D11) et une sixième diode (D51), configurées pour être couplées inversement en série entre le premier port d'entrée et le quatrième condensateur (C4), une cathode de la sixième diode (D51) est connectée au premier port, une anode de la cinquième diode (D11) est couplée au quatrième condensateur (C4) ;
      un comparateur (X1), configuré pour comparer la tension à la base du second transistor (Q2) avec la tension de l'anode de la cinquième diode (D11), et délivrer un résultat de comparaison ; et
      un coupleur optique (U1), configuré pour être commandé par le résultat de comparaison, dans lequel lorsque la tension à la base du second transistor (Q2) est inférieure à la tension de l'anode de la cinquième diode (D11), le coupleur optique est configuré pour coupler la base du second transistor (Q2) à l'anode de la cinquième diode (D11).

2. Circuit de suppression d'ondulation selon la revendication 1, dans lequel :

   un port d'entrée du coupleur optique (U1) est configuré pour recevoir le résultat de comparaison,
   deux ports de sortie du coupleur optique (U1) sont connectés à la base du second transistor (Q2) respectivement au noeud de connexion de la seconde diode (D4) et au deuxième condensateur (C1).

3. Circuit de suppression d'ondulation, comprenant :

   une première diode (D2) ;
   un premier port d'entrée, configuré pour recevoir une tension d'entrée par l'intermédiaire de la première diode (D2) ;
   un premier port de sortie, configuré pour délivrer une tension de sortie ;
   un premier condensateur (C2), configuré pour être connecté entre le premier port d'entrée et un port de masse ;
   un premier transistor (Q1), configuré pour être connecté entre le premier port d'entrée et le premier port de sortie ;
   une seconde diode (D4) et un deuxième condensateur (C1), configurés pour être connectés en série entre le premier port d'entrée et le port de masse ;

un second transistor (Q2), configuré pour être couplé entre une base du premier transistor et un noeud de connexion de la seconde diode (D4) et du deuxième condensateur (C1) ;

un troisième condensateur (C3), configuré pour être connecté entre une base du second transistor et le port de masse ; et

un circuit de commande de tension (100b) configuré pour être connecté à la base du second transistor (Q2), dans lequel lorsque la tension d'entrée chute à une valeur minimale, le circuit de commande de tension (100) est configuré pour amener une tension de la base du second transistor (Q2) à être supérieure à la tension d'entrée, et la tension de sortie à être égale à la valeur minimale, **caractérisé en ce que** le circuit de commande de tension (100b) comprend :

un dispositif de commande (M1), configuré pour détecter la tension d'entrée, et délivrer un signal de commande, dans lequel, lorsque la tension d'entrée chute à la valeur minimale, le dispositif de commande est configuré pour délivrer un premier signal de commande ; et

un coupleur optique (U1), configuré pour être commandé par le signal de commande, dans lequel, lorsque le premier signal de commande est reçu, le coupleur optique est configuré pour connecter la base du second transistor (Q2) au collecteur du second transistor (Q2).

4. Circuit de suppression d'ondulation selon la revendication 3, dans lequel :

un port d'entrée du coupleur optique (U1) est configuré pour recevoir le signal de commande,
deux ports de sortie du coupleur optique (U1) sont couplés à la base du deuxième transistor (Q2) respectivement au collecteur du second transistor (Q2).

5. Circuit de suppression d'ondulation selon l'une quelconque des revendications 1 à 4, dans lequel le circuit de suppression d'ondulation comprend en outre une diode Zener (D3), une anode de la diode Zener (D3) est connectée à la base du second transistor (Q2), une cathode de la diode Zener (D3) est connectée au collecteur du second transistor (Q2).

6. Équipement de pilotage comprenant le circuit de suppression d'ondulation selon l'une des revendications 1 à 5.

7. Procédé de commande d'un circuit de suppression d'ondulation, le circuit de suppression d'ondulation comprenant :

une première diode (D2) ;
un premier port d'entrée, configuré pour recevoir une tension d'entrée par l'intermédiaire de la première diode (D2) ;
un premier port de sortie, configuré pour délivrer une tension de sortie ;
un premier condensateur (C2), configuré pour être connecté entre le premier port d'entrée et un port de masse ;
un premier transistor (Q1), configuré pour être connecté entre le premier port d'entrée et le premier port de sortie ;
une seconde diode (D4) et un deuxième condensateur (C1), configurés pour être connectés en série entre le premier port d'entrée et le port de masse ;
un second transistor (Q2), configuré pour être couplé entre une base du premier transistor et un noeud de connexion de la seconde diode (D4) et du deuxième condensateur (C1) ;
un troisième condensateur (C3), configuré pour être connecté entre une base du second transistor et le port de masse ; et
un circuit de commande de tension (100a), configuré pour être connecté à la base du second transistor (Q2), dans lequel le circuit de commande de tension (100a) comprend :

un quatrième condensateur (C4), configuré pour être couplé entre le port de masse et le noeud de connexion de la seconde diode (D4) et du deuxième condensateur (C1) ;
une cinquième diode (D11) et une sixième diode (D51), configurées pour être couplées inversement en série entre le premier port d'entrée et le quatrième condensateur (C4), une cathode de la sixième diode (D51) est connectée au premier port, une anode de la cinquième diode (D11) est couplée au quatrième condensateur (C4) ;
un comparateur (X1) ; et
un coupleur optique (U1), configuré pour être commandé par un résultat de comparaison du comparateur (X1) ;
le procédé de commande comprend :

lorsque la tension d'entrée chute à une valeur minimale, le fait d'amener, par le circuit de commande de tension (100a), une tension de la base du second transistor (Q2) à être supérieure à la tension d'entrée, et la tension de sortie à être égale à la valeur minimale,
dans lequel l'étape d'aménagé comprend :

la comparaison, par le comparateur (X1), de la tension à la base du second transistor (Q2) avec la tension de l'anode de la cinquième diode (D11), et la délivrance du résultat de comparaison ; et lorsque la tension à la base du second transistor (Q2) est inférieure à la tension de l'anode de la cinquième diode (D11), le couplage, par le coupleur optique (U1), de la base du second transistor (Q2) à l'anode de la cinquième diode (D11).

8. Procédé de commande d'un circuit de suppression d'ondulation, le circuit de suppression d'ondulation comprenant :

une première diode (D2) ;
un premier port d'entrée, configuré pour recevoir une tension d'entrée par l'intermédiaire de la première diode (D2) ;
un premier port de sortie, configuré pour délivrer une tension de sortie ;
un premier condensateur (C2), configuré pour être connecté entre le premier port d'entrée et un port de masse ;
un premier transistor (Q1), configuré pour être connecté entre le premier port d'entrée et le premier port de sortie ;
une seconde diode (D4) et un deuxième condensateur (C1), configurés pour être connectés en série entre le premier port d'entrée et le port de masse ;
un second transistor (Q2), configuré pour être couplé entre une base du premier transistor et un noeud de connexion de la seconde diode (D4) et du deuxième condensateur (C1) ;
un troisième condensateur (C3), configuré pour être connecté entre une base du second transistor et le port de masse ; et
un circuit de commande de tension (100b), configuré pour être connecté à la base du second transistor (Q2), dans lequel le circuit de commande de tension (100b) comprend :

un dispositif de commande (M1) ; et
un coupleur optique (U1), configuré pour être commandé par un signal de commande du dispositif de commande (M1) ;
le procédé de commande comprend :

lorsque la tension d'entrée chute à une valeur minimale, le fait d'amener une tension de la base du second transistor (Q2) à être supérieure à la tension d'entrée, et la tension de sortie à être égale à la valeur minimale,
dans lequel l'étape d'aménagé comprend :

la détection, par le dispositif de commande (M1), de la tension d'entrée ;
lorsque la tension d'entrée chute à la valeur minimale, la délivrance, par le dispositif de commande (M1), d'un premier signal de commande ;
et
lorsque le premier signal de commande est reçu, la connexion, par le coupleur optique (U1), de la base du second transistor (Q2) au collecteur du second transistor (Q2).

Fig. 1

EP 4 136 742 B1

Fig. 2

**Fig. 3**

Fig. 4

Fig. 5

**Fig. 6**

701

| when the input voltage drops to a minimum value, the voltage control circuit (100, 100a, 100b) makes voltage of the base of the second transistor (Q2) to be higher than the input voltage, and the output voltage to equal to the minimum value |
| --- |

**Fig. 7**

**EP 4 136 742 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019165589 A1

- DE 2830655 B1